# EUROPEAN PATENT APPLICATION

(11) **EP 4 378 557 A1**
(43) Date of publication of application: **05.06.2024**
(21) Application number: 22210268.3
(22) Date of filing: 29.11.2022
(51) Int. Cl.: B01D 39/16, B01D 39/20, B01D 39/10

(54) **MEDIA FOR SELF-SUPPORTING PLEATED HVAC-FILTER**

(71) Applicant: Johns Manville, Denver, CO 80202 (US)
(72) Inventor: ALBRECHT, Annette, 97877 Wertheim (DE); UMMINGER, Jürgen, 97922 Lauda-Königshofen (DE)
(74) Representative: Patentanwälte Olbricht Buchhold Keulertz

(57) **Abstract**

Provided is self-supporting filter media comprising a nonwoven layer, comprising a blend of inorganic fibers and polymeric fibers, wherein the nonwoven layer is a single layer, which is pleatable. In addition, a filtration media is provided comprising said nonwoven layer and an efficiency layer comprising bio soluble micro glass fibers, wherein the efficiency layer is adhered to the nonwoven layer. The nonwoven layers according to the invention show a reduced PCS.

## Description

The invention relates to a self-supporting pleated filter media, comprising a nonwoven layer, and an efficiency layer.

### BACKGROUND

The importance of air quality, especially indoor air quality, and the awareness for air quality are constantly increasing. Therefore, air filters have become a crucial part of a today's HVAC system (HVAC meaning: Heating, Ventilation and Air Conditioning). Besides protecting the system's mechanical components, air filters in HVAC systems are reducing fine and ultrafine particle loads in the airstream, which can be anything from coarse and fine dust to bacteria and viruses. The effectiveness of air filters in HVAC systems is depending on their filtration efficiency class and the quality and frequency of the HVAC system maintenance.

The filters are designed to achieve a satisfactory filtration efficiency (ISO 16890, ASHRAE 52.2), Flammability class 2 according to UL 900 and service life according to the sphere of application.

Air filters having a three-layer configuration are known in the art. They have a first micro glass fiber layer for dust filtration and a combination of a glass fiber layer and a synthetic fiber layer, wherein the glass fiber layer and the synthetic fiber layer are glued together to build a self-supporting nonwovens layer. The self-supporting nonwovens layer is used to manufacture a pleated filter composite comprising multiple layers of porous material. In this configuration, the filter media consists of micro glass fiber layer, acting as a particle filter, in particular fine particle filter, the glass fiber layer providing the main mechanical support while being pleatable. The synthetic fiber layer mechanically supports, filters, and acts as block escape of glass fibers or particles from the filter composite during gas flow there through.

Such composite layer configuration and media box filters are disclosed in US 5,985,411 A and US 5,630,856 A, for example.

Therefore, a technical objective of the invention is to provide a nonwoven layer for the micro glass layer to be elastic enough to form and back a pleated filter media, without braking during pleating and providing a sustainable mechanically stable shape.

### SUMMARY OF THE INVENTION

In accordance with a first aspect of the invention, a self-supporting filter media a nonwoven layer and an efficiency layer, wherein
the nonwoven layer comprises a blend of inorganic fibers with polymeric fibers and the nonwoven layer is a single layer, which is pleatable.

In accordance with another aspect of the invention, a filter media is provided comprising
a) a nonwoven layer according to the first aspect of the invention as described and claimed herein and
b) an efficiency layer comprising micro glass fibers, preferably biosoluble micro glass fibers,
wherein the efficiency layer is adhered to the nonwoven layer.

### DETAILED DESCRIPTION OF THE INVENTION

As used herein, the term "nonwoven layer" refers to a fabric composed of staple fibers oriented in a random pattern and bonded together by thermal, mechanical and/or chemical means resulting in a nonwoven.

As used herein the term "self-supporting" means without need for wire backing or other auxiliary support adjacent areal extents of the composite.

The self-supporting nonwoven layer according to the invention is a nonwoven layer made out of a blend of glass fibers and polymeric fibers, which is pleatable. Preferably, the single nonwoven layer consists of a blend of glass fibers in combination with polymeric fibers.

The nonwoven layer is either a wet-laid nonwoven, a dry-laid nonwoven or spunbonded nonwoven, which is consolidated by means of thermoplastic and/or thermoset binders and/or mechanical means, with the proviso that the nonwoven is not consolidated by needling and/or hydro-jet needling. Preferably, the nonwoven layer is a staple fiber nonwoven and/or a spunbonded nonwoven and/or a glass staple fiber nonwoven.

In one embodiment the nonwoven layer comprises
70 to 95 % by weight glass fibers or mineral fibers, preferably glass fibers
5 to 30% by weight polymeric fibers, preferably PET fibers.

In a preferred embodiment of the invention the nonwoven layer consists of 5% to 30% of polyester (PET) fibers by weight and 70% to 95 % of glass fibers by weight.

The nonwoven layer can comprise polymeric fibers, preferably PET fibers in a percentage range of up to 30 % by weight, preferably between 5 to 30% by weight.

The fibers are preferably oriented.

### Synthetic fibers

The nonwoven layer comprises a blend of inorganic and polymeric fibers. polymeric materials are, for example, thermoplastics, preferably polyamides, such as polyhexamethylene-diadipamide, polycaprolactam, aromatic or partially aromatic polyamides ("aramides"), aliphatic polyamides, such as nylon, partially aromatic or fully aromatic polyesters, aliphatic polyesters, polycarbonates (PC), polyphenylene sulphide (PPS), polyphenylene oxide (PPO), polystyrene (PS), polyvinyl carbazole (PVK), polyacetal (POM), polyaryl ether, polyaryl sulphone, polyether sulphone, polymers with ether and keto-groups, such as polyether ketones (PEK) and polyetheretherketone (PEEK), polyolefins, such as polyethylene or polypropylene, or polybenzimidazoles. Particularly preferred are polyesters, polyolefins, such as e.g. polyethylene or polypropylene, or aromatic or partially aromatic polyamides ("aramids"), aliphatic polyamides, such as e.g. nylon.

Preferably, a melt-spinnable polyester is used. The polyester material can, in principle, be any known type suitable for fiber production.

Spunbonded fibers which consist of at least 85 mole % of polyethylene terephthalate are particularly advantageous as synthetic organic, polymeric fibers. The remaining 15 mol % are then formed by dicarboxylic acid moieties and glycol moieties which act as so-called modifiers and allow the person skilled in the art to specifically influence the physical and chemical properties of the produced filaments. Examples of such dicarboxylic acid units are residues of isophthalic acid or of aliphatic dicarboxylic acid, such as glutaric acid, adipic acid, and sebacic acid; examples of modifying diol residues are those composed of longer-chain diols, such as propane diol or butane diol, of diethylene or triethylene glycol or, if present in small quantities, of polyglycol with a molar weight of approximately 500 to 2000.

The polyesters contained in the spunbonded nonwoven preferably have a molecular weight corresponding to an intrinsic viscosity (IV) of 0.6 to 1.4, measured in a solution of 1 g polymer in 100 ml dichloroacetic acid at 25° C.

Polyesters containing at least 95 mol % of polyethylene terephthalate (PET) are particularly preferred, especially those composed of unmodified PET.

The titer of the polyester fibers (PET fibers) in the nonwoven layer, can be in the range of between 0.5 to 3 dtex, preferably 1 to 2 dtex. The length of the polyester fibers (PET fibers) in the nonwoven layer, can be in the range of between 5 to 100 millimeters, preferably 5 to 25 millimeters.

### Inorganic fibers

The inorganic fibers are glass fibers and/or mineral fibers. The glass fibers can be any type of glass, such as A-glass or E-glass, or C-glass, R-glass or T-glass made by using a rotary or flame attenuation process. Instead of glass fibers, mineral fibers based on aluminosilicates, ceramics, dolomite fibers or fibers from vulcanites such as, for example, basalt diabases, melaphyre diabases (dolerite) and melaphyres (what are known as paleobasalts) may be used. For economic reasons E-glass or C-glass is preferred.

The fiber diameter of the glass fibers in the nonwoven layer can be in the range of between 5 and 20 µm preferably 10 to 15 µm.

The length of the glass fibers in the nonwoven layer, can be in the range of between 5 and 100 millimeters, preferably 10 to 50 millimeters.

The glass fiber component can also consist of a mixture of at least two glass fiber types, wherein an at least first glass fiber type of the mixture consists of a first cohort of glass fibers having a fiber diameter in the range of 5 - 20µm and a second cohort of glass fibers having a fiber diameter in the range of 5 - 20µm.

### Binder/Thermal consolidation

The mechanical stresses acting during pleating may induce cracking (if the stiffness it to high) or delamination/ peeling of layers. Therefore, a consolidation of the nonwoven fabric material is required.

The polymeric fibers in the nonwoven layer may be used as binder fibers for thermal consolidation. The fibers may also have a two-component structure (for example core/sheath), in which the sheath is the binder polymer.

Alternatively, or in addition to binder fibers which are capable of thermal consolidation, the nonwoven layer can be impregnated with a chemical binder, by means of thermoplastic and/or thermoset binders. Various binder systems, in particular, binders based on urea-formaldehyde resin, acrylates or styrenes may be considered. The binder fraction is advantageously up to 30% by weight, preferably in the range of 10 to 25 % by weight of the finished nonwoven. A feasible binder composition might comprise urea resin, polyacrylate, polyvinyl acetate or a composition or mixture of such binder components. The binder will be applied as an aqueous solution to the laid fibers.

### Nonwoven layer properties

The nonwoven layer in the filter media according to the invention has an air permeability of least 1500 l/m² sec, measured respectively in accordance with DIN EN ISO 9237. Preferably, the nonwoven layer has an air permeability in the range of 1700 to 2300 l/m² sec.

The nonwoven layer has preferably a total area weight between 80 and 120 g/cm², preferably between 95 and 105 g/m².

The nonwoven layer preferably has a tensile strength in machine direction MD in a range of 350 to 500 N/5cm and in cross direction CD in a range of 200 to 350 N/5cm. The ratio of MD/CD is preferably between 1.4 and 1.9.

By setting the machine direction tensile strength and the cross direction tensile strength of the nonwoven layer as described above, the mechanical strength is sufficient for holding the attached micro glass fine particle layer in the corrugated pleated shape. In the practical application as for example a filter element in a box filter or filter bank which is comprised of one or more filter elements the filter stack can be imparted in a way to have excellent durability.

The nonwoven layer preferably has a thickness between 0.8 and 1.5mm, more preferably between 0.90 and 1.10 mm.

The pleatability of the nonwoven layer can be characterized by the material stiffness, the so-called Gurley stiffness (according to ASTM D6125-97).

The nonwoven layer according to the invention despite being mechanically stable, pleatable and having a high folding endurance shows lowest pressure drop. The main function of the nonwoven layer is to act as a stabilizing backbone (instead of a metal wiring).

The caloric values (PCS) of the nonwoven layer is between 4000 and 8000 J/g, preferably between 5000 and 7000J/g (measured according to DIN EN ISO 1716, DIN 51900, part 1 + 3). The single nonwoven layer configuration according to the invention has several technical advantages, as follows:
- A single layer does not require an additional adhesion process, where both the mechanical adhesion quality and material lifetime can relate to the adhesion interface, which might deteriorate/disintegrate during use.
- Not requiring an additional adhesion step saves both manufacturing costs (adhesives / manufacturing line machinery) and machine time /output.
- The total LOI (Loss on ignition is improved) and thus the environmental performance.
- The flame resistance is improved by reducing PCS value.

### Nonwoven layer measurement

Several samples of nonwoven layers according to the invention and of comparative examples were produced. The samples were tested and measured using the following measuring methods if not further described below:

| | |
|---|---|
| Air permeability: | The air permeability is determined according to DIN EN ISO 9237. |
| Area weight: | The weight per unit area [area weight] is determined according to DIN EN 12127 / DIN EN ISO 29073-1 |
| Thickness: | The thickness is determined according to DIN EN ISO 9073-2 |
| Loss on ignition: | The Loss on ignition (LOI) is determined according to ISO 1887. |
| Caloric value: | The caloric value (PCS) is determined according to DIN EN ISO 1716 / |
| | + DIN 51900-1+ 3. |
| Tensile strength: | The tensile strength (mechanical strength) is determined according to DIN EN 29 073-3 |
| Specific tensile strength: | The tensile strength is determined according to DIN EN 29 073-3. The specific tensile strength is calculated via the formula: (tensile strength in MD + tensile strength in CD) / ((loss on ignition/100) * area weight) [N/g LOI]. The specific tensile strength is the measured tensile strength of a sample in loading direction (MD, CD) of the load during mechanical stress testing divided by loss on ignition and multiplied with the area weight of such sample. |

(i) Test pieces each having a size of 30 cm x 5 cm whose long side corresponded to the machine direction are collected from three points per 1 m positioned at equal intervals along the width direction.
(ii) Tensile tests were carried out at a clamping distance of 20 cm and a tensile rate of 10 cm/min using a constant speed elongation type tensile tester.
(iv) The strength at break was read and rounded to the nearest integer to determine the tensile strength (N/5cm).
(v) The tensile strength (N/5 cm) value obtained in the above (iv) is divided by the value of the weight per unit area (g/m²), and the resulting value is rounded to one decimal place to calculate the tensile strength per weight per unit area for each of the machine direction and the cross direction.

The tensile strength in the machine direction of the nonwoven layer for use in filters according to embodiments of the present invention was measure in machine direction (MD tensile strength) and in 90 degree to the machining direction (CD tensile strength). The machine direction refers to a sheet conveying direction during the manufacture of the nonwoven layer that is, the winding direction of the roll of the nonwoven layer fabric. The cross machine direction refers to a direction perpendicular to the sheet conveying direction during the manufacture of the nonwoven.

### Filter media

The invention provides a filter media. One embodiment of the filter media comprises a self-supporting nonwoven layer according to the invention and an efficiency layer comprising micro glass fibers made of biosoluble glass, i.e. a micro glass fine particle layer. The efficiency layer is adhered to the nonwoven layer with a thermosetting binder such as phenol-formaldehyde, melamine-formaldehyde or polyacrylic acid crosslinked with polyol. For the filter media nonwoven layers according to the invention are used as backing and a layer of micro glass fibers, the so-called efficiency layer is deposited on and adhered to the nonwoven layer.

The biodegradability is of importance in any filter application, wherein glass fibers could separate from the layer (in a ppm fraction) and would be exposed to inhalation.

The efficiency layer comprises micro glass fibers, preferably biosoluble micro glass fibers, having a fiber diameter between 0.5 and 3µm, preferably between 0.8µm to 1.6µm. To bond the fibers, a binder, preferably a phenolic binder is used. The efficiency layer comprises between 80 % to 90 % of micro glass fibers and between 10 and 20 % by weight of binder.

The micro glass fibers forming the efficiency layer (dust holding filter layer) can be produced using known dry laid processes.

The filter media used exhibits an average air filtration efficiency of 20 to 95%, (measured according to ISO 16890 or ASHRAE 52.2).

The total weight of such filter media is between 100 and 160g/m², preferably between 120 and 150 g/m².

Filter media stiffness is critical in view of pleatability and mechanical endurance, as described before. The filter media according to the present invention preferably has a stiffness in the range of 10 mN to 100 mN.

If the stiffness is 10 mN or more, more preferably 20 mN or more, the pleating can be performed while the strength and retention property of the backing layer nonwoven fabric are maintained. Meanwhile, if the stiffness is 100 mN or less, preferably 50 mN or less, the folding resistance during pleating is low enough to not result in cracking or delamination of sublayers or highly deformed areas. High stiffness, though providing mechanical stability might also induce sharpened finishing at the edges of the pleated layer as well as higher compressed parts after folding. Such highly compressed layer areas (highs and peaks of the folded structure) having a significantly decreased air permeability (filter efficiency reduction or energy increase).

If the stiffness is 10 mN or more, more preferably 20 mN or more, the pleating can be performed while the strength and retention property of the nonwoven layer are maintained.

Air filters are used 24/7. Therefore, energy consumption is of importance. As energy consumption is directly related to the pressure drop, critical technical and commercial parameters are the initial pressure drop and the increase of pressure drop over life time.

The nonwoven layer is self-supporting and provides endurable support for the micro glass media layer. The micro glass media layer being effective for filtering fine particles in the sub micron particle size range. As the composite is self-supporting no wire backing or other auxiliary support adjacent areal extents of the composite is needed.

The filter media according to the invention can be used as a filter material for pleated filters. It is preferably used for self-supporting pleated HVAC-filter. Suitable filter grades are MERV11, MERV13 and MERV14 (ASHRAE Standard 52.2).

In the practical application as for example a filter element in a box filter or filter bank which is comprised of one or more filter elements the filter stack can be imparted in a way to have excellent durability.

It was found that the known filter media can be improved by the use of special self-supporting nonwoven layer.

### Filter media - Measurement of physical properties

The grades MERV11, MERV13, MERV14 reflect the filter efficiency. A filter's MERV number indicates how it's rated in its performance to remove particles. An air filter's minimum efficiency reporting value (MERV) rating measures how effectively the filter stops dust and other contaminants from passing through the filter and into the air stream. Filters with higher MERV ratings trap small particles more effectively than filters with lower MERV ratings.

In general, filters with a rating of MERV 16 or below are considered to be HVAC-system-grade filters for residential, commercial and general hospital use.

The pleated filter efficiencies are targeted as to MERV11 - 65%, MERV13 - 85% and MERV14 - 95%.

The same efficiency layers were adhered both to the prior art nonwoven layer and to the nonwoven layer as to the invention as shown in the following Table 1.

Table 1 depicts also, that a similar or lower area weight of the nonwoven layer according to the invention a comparable or better pressure drop and a comparable or better flat sheet filtration efficiency can be achieved.

**Table 1: Performance parameters of filter media (as to the invention) and 3- layer media (glass + synthetic layer nonwoven - prior art)**

| **Property** | | **MERV 11** Prior art Nonwoven layer (2 layer: glass +synthetic) | **MERV 11 with nonwoven layer as** to **the invention** | **MERV 13** Prior art Nonwoven layer (2 layer: glass +synthetic) | **MERV 13 with nonwoven layer as to the invention** | **MERV 14** Prior art Nonwoven layer (2 layer: glass +synthetic) | **MERV 14 with nonwoven layer as to the invention** |
|---|---|---|---|---|---|---|---|
| **Backing** | | Prior art Backing (2 layer: glass +nylon) | 100g/m² 88% 13 µm E-Glass 12% PET 1.7dtex | Prior art Backing (2 layer: glass +nylon) | 100g/m² 88% 13 µm E-Glass 12% PET 1.7dtex | Prior art Backing (2 layer: glass +nylon) | 100g/m² 88% 13 µm E-Glass 12% PET 1.7dtex |
| **Basis weight** | g/m² | 140 - 170 | 125 - 135 | 125 - 160 | 130 - 145 | 130 - 160 | 130 - 145 |
| **Flat sheet Pressure drop** | Pa | 27 | 27-33 | 55 | 47-50 | 85 | 74 - 78 |
| **Flat sheet efficiency** | % | 23 | 30-35 | 53 | 50-55 | 73 | 65-70 |
| Basis weight: the weight per unit area is determined according to DIN EN ISO 29073-1. | | | | | | | |
| Pressure drop measured @ 0.18m/s | | | | | | | |
| Efficiency measured for 0.3-0.5µm @ 0.18m/s | | | | | | | |

The stiffness (Gurley stiffness) in the present invention is a value obtained by the following measurement according to ASTM D6125-97. To measure the Gurley stiffness:
(i) Test pieces having a length of 38.1 mm (effective sample length L: 25.4 mm) and a width d of 25.4 mm are collected from 5 random locations of a sample. In the present invention, a longitudinal direction of the nonwoven fabric is taken as a machine direction of a sample.
(ii) Each collected test piece is attached to a chuck, and the chuck is fixed in conformity with a scale, II/2 inch (1.5 inch:38.1 mm), on a movable arm.
(iii) An appropriate weight gm is attached to rotate the movable arm at a constant speed, and a value (mgf) of a scale RG determined.
(iv) Measurement is performed 5 times per each of a front face and a back face of 5 test pieces, 50 times in total.
(v) The average value of 50 measurements is rounded to one decimal place to calculate the stiffness (mN) of the sample

The following table 2 details the Gurley stiffness results for the preferred nonwoven layer composition. The weight gm was 50 g.

**Table 2: Gurley stiffness of filter media MERV 11 with nonwoven layer**

| | | | |
|---|---|---|---|
| Overall Avg | 4.100,5 | mqF | Machine Direction |
| | 40,2 | mN | |
| Overall Avg | 2.678,1 | mqF | Cross Machine Direction |
| | 26,3 | mN | |

If the stiffness is 10 mN or more, more preferably 20 mN or more, the pleating can be performed while the strength and retention property of the nonwoven layer are maintained.

### Caloric values of the nonwoven layer and the filter media

The caloric values (PCS) of the prior art nonwoven layer and the filter media according to the invention were measured according to DIN EN ISO 1716, DIN 51900, part 1 + 3.

A higher caloric value results in a higher flammability and lower fire resistance. This is due to the fact that higher caloric values upon ignition and burning induce more heat for self-propagating flame and fire.

**Table 3: Nonwoven layer and filter media caloric values as to the example materials of Table 1**

| | Nonwoven layer (inventive) | MERV 14 filter media (inventive) | MERV 14 prior art Nonwoven layer | MERV 14 prior art filter media |
|---|---|---|---|---|
| Caloric value | 5000 - 7000 | 5500 - 6500 | 11000 - 12000 | 9000 - 10000 |

Table 3 shows measured caloric values of both the nonwoven layer according to the invention and the filtration media comprising such nonwoven layer in comparison to the prior art nonwoven layer (glass fibers + synthetic fibers) and a filter media comprising such prior art nonwoven layer.

As can be seen the nonwoven layer according to the invention has lower caloric values as compared to the prior art nonwoven layer. Thus, a filter media substituting the prior art nonwoven layer with a nonwoven layer according to the invention will be attributed with a better fire resistance rating or classification.

Specific details are given in the description to provide a thorough understanding of the embodiments. However, it will be understood by one of ordinary skill in the art that the embodiments may be practiced without these specific details. For example, well-known structures and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the spirit and scope of the invention.

## Claims

1. Self-supporting filter media comprising a nonwoven layer and an efficiency layer, wherein
the nonwoven layer comprises a blend of inorganic fibers with polymeric fibers and
the nonwoven layer is a single layer, which is pleatable.

2. Filter media_according to claim 1, wherein the nonwoven layer comprises 70 to 95 % by weight glass fibers and 5 to 30 % by weight polymeric fibers, preferably PET fibers.

3. Filter media according to claim 1, wherein the inorganic fibers are glass fibers and the glass fibers can be any type of glass, preferably A-glass or E-glass, or C-glass, R-glass or T-glass.

4. Filter media according to claim 1, wherein the polymeric fibers are selected from the group of polyesters, polyolefins, aromatic polyamides, partially aromatic polyamides and aliphatic polyamides.

5. Filter media according to claim 4, wherein the polymeric fibers are a melt-spinnable polyester, preferably spunbonded fibers which consist of at least 85 mol % of polyethylene terephthalate and 15 mol % of dicarboxylic acid moieties and/or glycol moieties.

6. Filter media according to claim 2, wherein the nonwoven layer comprises 70 to 95 % by weight glass fibers and 5 to 30 % by weight polymeric fibers, preferably PET fibers.

7. Filter media according to claim 2, wherein the nonwoven layer is a staple fiber nonwoven.

8. Filter media according to claim 2, wherein the nonwoven layer is impregnated with a chemical binder, preferably up to 30% by weight of the chemical binder.

9. Filter media according to claim 8, wherein the chemical binder comprises urea resin, polyacrylate, polyvinyl acetate or a composition or mixture of such binder components.

10. Filter media according to claim 2, wherein the air permeability is at least 1500 l/m² sec measured in accordance with DIN EN ISO 9237.

11. Filter media according to claim 2, wherein the fiber diameter of the glass fibers in the nonwoven layer is in the range of between 5 to 20 µm.

12. Filter media according to claim 2, wherein the length of the glass fibers in the nonwoven layer is in the range of between 5-100 millimeters.

13. Filter media according to claim 2, wherein the caloric values (PCS) is between 4000 and 8000 J/g, preferably between 5000 and 7000J/g.

14. Filter media according to claim 1 comprising
a) a nonwoven layer and
b) an efficiency layer comprising micro glass fibers,
wherein the efficiency layer is adhered to the nonwoven layer.

15. Filter media according to claim 14, wherein the glass fibers in the efficiency layer comprises bio soluble micro glass fibers, having a fiber diameter of between 0.5µm to 3µm.

16. Filter media according to claim 14, wherein the glass fibers in the efficiency layer comprises between 80 % to 90 % of micro glass fibers and 10 to 20 % of binder.

17. Filter media according to claim 14, wherein the filter media provides a stiffness in the range of 10 mN to 100 mN.

18. Filter media according to claim 14, wherein the caloric values (PCS) is between 5500 and 6500 J/g.
